# EUROPÄISCHE PATENTSCHRIFT

(11) **EP 3 649 377 B1**
(45) Veröffentlichungstag und Bekanntmachung des Hinweises auf die Patenterteilung: **08.03.2023**
(21) Anmeldenummer: 18739453.1
(22) Anmeldetag: 13.06.2018
(51) Int. Cl.: F16H 57/02, F16H 57/029, F16H 57/021

(54) **GETRIEBE UND VERFAHREN ZUM HERSTELLEN EINES GETRIEBES MIT EINEM GEHÄUSE**
TRANSMISSION, AND METHOD FOR PRODUCING A TRANSMISSION WITH A HOUSING
BOÎTE DE VITESSES ET PROCÉDÉ DE FABRICATION D'UNE BOÎTE DE VITESSES MUNIE D'UN CARTER

(30) Priorität: 06.07.2017 DE 102017006409
(43) Veröffentlichungstag der Anmeldung: 13.05.2020
(73) Patentinhaber: SEW-EURODRIVE GmbH & Co. KG, 76646 Bruchsal (DE)
(72) Erfinder: LAMAJ, Ermalt, 68161 Mannheim (DE); MÜLLER, Mathias, 76437 Rastatt (DE); ELLER, Peter, 76676 Graben-Neudorf (DE); SCHWAN, Tobias, 69168 Wiesloch (DE)
(86) Internationale Anmeldenummer: PCT/EP2018/025161
(87) Internationale Veröffentlichungsnummer: WO 2019/007551

(56) Entgegenhaltungen:
- DE-A1-102008 004 337
- GB-A- 407 432
- US-A- 3 710 646

## Beschreibung

Die Erfindung betrifft ein Getriebe und ein Verfahren zum Herstellen eines Getriebes mit einem Gehäuse.

Aus der DE 10 2008 004 337 A1 ist als nächstliegender Stand der Technik ein Getriebegehäuse bekannt, das ein unteres und ein darauf aufgesetztes oberes Gehäuseteil aufweist. Ferner offenbart die oben genannte Patentanmeldung ein Verfahren zum Herstellen eines Getriebes, wobei das Gehäuse des Getriebes aus einem unteren und einem oberen Gehäuseschale besteht, die als erster Herstellungsschritt aus zwei Gussteilen hergestellt werden. Dann werden in beide Gussteil Bohrungen eingebracht. Als dritter Herstellungsschritt werden die Gehäuseschalen zusammengesetzt und gemeinsame Wellenlagerbohrungen der Schalen gefertigt.

Aus der GB 407 432 A ist ein verbessertes Getriebegehäuse bekannt.

Aus der US 3 710 646 A ist ein zweigeteiltes Getriebegehäuse bekannt.

Aus der CN 2 02 251 847 U ist ein Getriebe bekannt.

Aus der DE 197 54 359 A1 ist ein Getriebe für Doppelschnecken-Extruder bekannt.

Aus der Veröffentlichung WITTELH., MUHS D., JANNASCH D., VOßlEK J.: Roloff/Matek Maschinenelemente 19. Auflage, Wiesbaden: Vieweg Teubner, 2009, Seiten: Titel,

Impressum, 660, 664, ISBN 978-3-8348-0689-5 ist ein dichte Verbinden von Gehäuseteilen bekannt.

Aus der Veröffentlichung KÖHLER, RÖGNITZ: Maschinenteile, Teil 2, 7. Auflage, Stuttgart: B. G. Teubner 1986, Seiten: Titel, Impressum, 114, 115 - ISBN 978-3-322-91833-8 ist die Befestigung von Wellen in einem Gehäuse bekannt.

Der Erfindung liegt daher die Aufgabe zugrunde, ein Getriebe mit geteiltem Gehäuse einfach herzustellen, wobei die Dichtigkeit des Gehäuses gewährleistet sein muss.

Erfindungsgemäß wird die Aufgabe bei dem Getriebe nach den in Anspruch 1 und bei dem

Verfahren nach den in Anspruch 8 angegebenen Merkmalen gelöst. Weitere vorteilhafte Ausgestaltungen der Erfindung ergeben sich aus den abhängigen Ansprüchen.

Wichtige Merkmale der Erfindung bei dem Getriebe sind, dass das Getriebe mit einem Gehäuse ausgeführt ist, das ein unteres Gehäuseteil und ein oberes Gehäuseteil aufweist,
wobei das Gehäuse Lageraufnahmen aufweist,
wobei am unteren Gehäuseteil zwischen jeweils zwei Lageraufnahmen jeweils ein Steg ausgeformt ist, welcher jeweils auf einen am oberen Gehäuseteil ausgeformten, zwischen den jeweiligen Lageraufnahmen angeordneten Steg angedrückt ist,
   - wobei die Gehäuseteile eine derartige elastische Verspannung oder Verformung aufweisen, dass bei Separieren und/oder Trennen der beiden Gehäuseteile, insbesondere also elastischem Entspannen, ein erster Steg der Stege eines ersten der beiden Gehäuseteile über eine ebene Fläche, insbesondere Trennfläche, hervorragt, welche die anderen Stege des ersten Gehäuseteils begrenzt,

Von Vorteil ist dabei, dass am unteren Gehäuseteil eine ebene Trennfläche ausgebildet ist.

Somit ist die Herstellung einfach, da eine Flachbearbeitung, insbesondere Flachfräsen und/oder Flachschleifen, ausführbar ist. Ebenso ist am oberen Gehäuseteil eine einfache Herstellung ermöglicht, weil dort ebenfalls eine ebene Trennfläche ausführbar ist. Allerdings wird dort ein Beriech zur Formung des ersten Stegs ausgelassen. Dieser am obere Gehäuseteil zum unteren Gehäuseteil hin, also durch die Trennfläche durchragender Bereich dient zur Bildung des ersten Stegs. Der Überstand des ersten Stegs über die Trennfläche hinaus ist derart klein, dass beim Verbinden der beiden Gehäuseteile nur eine elastische und keine inelastische Verformung auftritt. Somit sind nach Verbinden der beiden Gehäuseteile dann in das Gehäuse die Lagerbohrungen einbringbar. Ein Lösen der Verbindung und nachfolgendes wiederholtes Verbinden der Gehäuseteile zur Bildung des Gehäuses ändert somit die Geometrie letztendlich nicht. Nur im separierten Zustand sind die Lagerbohrungen deformiert. Die Bohrungsachsen der Lagerbohrungen liegen in der gedachten Ebene der ebenen Trennflächen. Mittels der elastischen Verformung wird eine besonders hohe Dichtigkeit bewirkbar, ohne dass der erste Steg durch in ihm angeordnete Schrauben auf den entsprechenden Steg gedrückt wird.

Die Lagerbohrungen, also Lageraufnahmen durchdringen die Wandung der Gehäuseteile und sind jeweils zweiteilig ausgeführt, also an der Vorderseite und Hinterseite des jeweiligen Gehäuseteils. Die Stege bilden die Endbereiche der Wandung der Gehäuseteile und sind jeweils zweiteilig ausgeführt, also an der Vorderseite und Hinterseite des jeweiligen Gehäuseteils.

Bei einer vorteilhaften Ausgestaltung ist der erste Steg zwischen der Lageraufnahme für das Lager der eintreibenden Welle und der Lageraufnahme für ein Lager einer ersten Zwischenwelle angeordnet. Von Vorteil ist dabei, dass ein geringer Achsabstand in der eintreibenden Getriebestufe erreichbar ist, obwohl das Gehäuse geteilt ausgeführt ist. Denn der erste Steg muss keinen Stift und auch keine Schraube aufnehmen und ist somit schmal ausführbar.

Bei einer vorteilhaften Ausgestaltung weisen mit Ausnahme des ersten Stegs und des diesen ersten Steg berührenden Stegs des anderen Gehäuseteils alle Stege eine Ausnehmung zur Aufnahme eines Stifts und zumindest einer Schraube auf. Von Vorteil ist dabei, dass die Gehäuseteile miteinander verbindbar sind und dabei die jeweils zueinander korrespondierenden Stege aufeinandergedrückt werden. Dabei wird auch der erste Steg auf den entsprechend zugeordneten Steg des anderen Gehäuseteils gedrückt.

Bei einer vorteilhaften Ausgestaltung sind die Lageraufnahmen jeweils als Lagerbohrung ausgeführt sind, wobei die Bohrungen, insbesondere die Bohrungsachse, parallel zueinander ausgerichtet sind,
die Bohrungsachsen der Lagerbohrungen in einer Ebene angeordnet sind. Von Vorteil ist dabei, dass eine ebene Trennfläche vorsehbar ist.

Bei einer vorteilhaften Ausgestaltung ist in den ersten Steg des ersten Gehäuseteils keine Ausnehmung zur Aufnahme eines Stiftes oder einer oder mehrerer Schrauben eingearbeitet. Von Vorteil ist dabei, dass der erste Steg sehr schmal ausführbar ist und somit der Achsabstand der eintreibenden Stufe sehr gering ausführbar ist, obwohl große Lager und somit große Drehmomente übertragbar sind.

Bei einer vorteilhaften Ausgestaltung sind in die anderen Stege jeweils eine Ausnehmung zur Aufnahme eines Stifts und zumindest eine Ausnehmung zur Aufnahme einer Schraube eingearbeitet,
insbesondere wobei die Ausnehmungen als Bohrungen ausgeführt sind, deren Bohrungsachse in Normalenrichtung zur ebenen Fläche gerichtet sind. Von Vorteil ist dabei, dass eine große Andrückkraft zwischen den beiden Gehäuseteilen erreichbar ist.

Bei einer vorteilhaften Ausgestaltung ist der erste Steg schmaler als die anderen Stege des ersten Gehäuseteils ausgeführt. Von Vorteil ist dabei, dass somit der Achsabstand der eintreibenden Stufe sehr gering ausführbar ist, obwohl große Lager und somit große Drehmomente übertragbar sind.

Wichtige Merkmale bei dem Verfahren zum Herstellen eines Getriebes sind, dass
in einem ersten Verfahrensschritt eine mit Ausnahme eines für einen ersten Steg vorgesehenen Bereichs ebene Trennfläche an einem ersten Rohgussteil zur Herstellung eines oberen Gehäuseteils des Gehäuses des Getriebes bearbeitet wird, insbesondere ausgefräst wird,
wobei der Bereich durch die die ebene Trennfläche aufnehmende Ebene hindurchragt,
wobei eine ebene Trennfläche an einem zweiten Rohgussteil zur Herstellung eines unteren Gehäuseteils des Gehäuses des Getriebes bearbeitet wird, insbesondere ausgefräst wird,
wobei danach in einem nachfolgenden zweiten Verfahrensschritt außerhalb des Bereichs jeweilige Ausnehmungen zur Aufnahme eines jeweiligen Stifts oder einer jeweiligen Schraube in das erste und/oder zweite Rohgussteil, insbesondere also untere und/oder obere Gehäuseteil, eingebracht werden, insbesondere gebohrt werden,
wobei in einem nachfolgenden dritten Verfahrensschritt das erste und das zweite Rohgussteil verbunden werden, insbesondere mittels der Stifte und der Schrauben,
in einem nachfolgenden vierten Verfahrensschritt Lagerbohrungen jeweils in das untere und obere Gehäuseteil eingebracht werden zur Herstellung des aus unterem und oberem Gehäuseteil gebildeten Gehäuses, insbesondere wobei auch der erste Steg gebildet wird,
wobei danach in einem nachfolgenden fünften Verfahrensschritt das untere Gehäuseteil vom oberen Gehäuseteil getrennt wird, insbesondere durch Entfernen der Schrauben,
wobei danach in einem nachfolgenden sechsten Verfahrensschritt Lager, Wellen und Zahnräder im unteren Gehäuseteil angeordnet werden, insbesondere nach Reinigung des oberen und des unteren Gehäuseteils,
in einem nachfolgenden, insbesondere letzten, siebten Verfahrensschritt das obere Gehäuseteil auf das untere Gehäuseteil aufgesetzt und verbunden wird.

Von Vorteil ist dabei, dass die Bohrungen dann eingebracht werden, wenn die beiden Gehäuseteile im Wesentlichen genauso verformt sind, wie im fertig hergestellten Getriebe. Denn beim Verbinden wird der erste Steg mit hoher Andrückkraft aufgedrückt und dadurch das Gehäuseteil verformt. Diese Verformung ist auch nach Lösen und nachfolgendem Wiederherstellen der Verbindung der beiden Gehäuseteile unverändert. Die vorzugsweise kreiszylindrisch ausgeführten Lagerbohrungen sind also beim wiederholten Verbinden der Gehäuseteile unverformt, insbesondere kreiszylindrisch.

Die Erfindung wird nun anhand von schematischen Abbildungen näher erläutert:

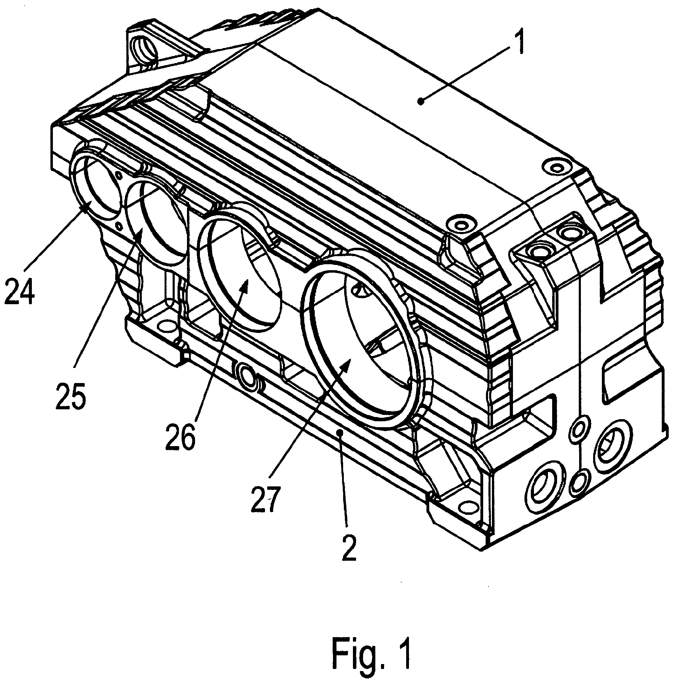

In der Figur 1 ist ein Gehäuse eines erfindungsgemäßen Getriebes in Schrägansicht dargestellt.

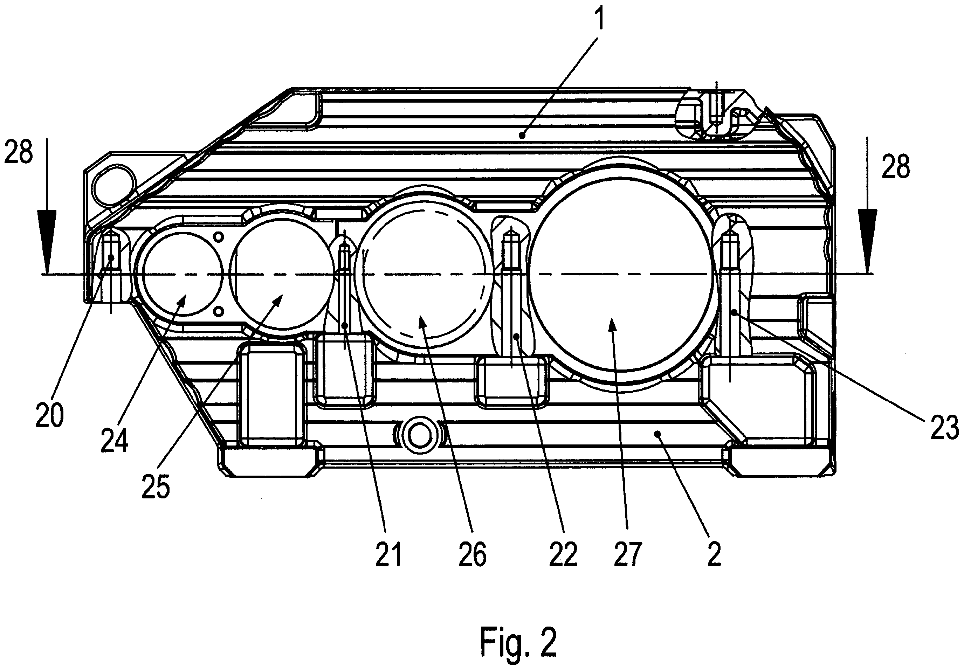

In der Figur 2 ist das Gehäuse in Seitenansicht dargestellt, wobei der Aufnahmebereich (20, 21, 22, 23) für Schrauben (70) angeschnitten dargestellt ist.

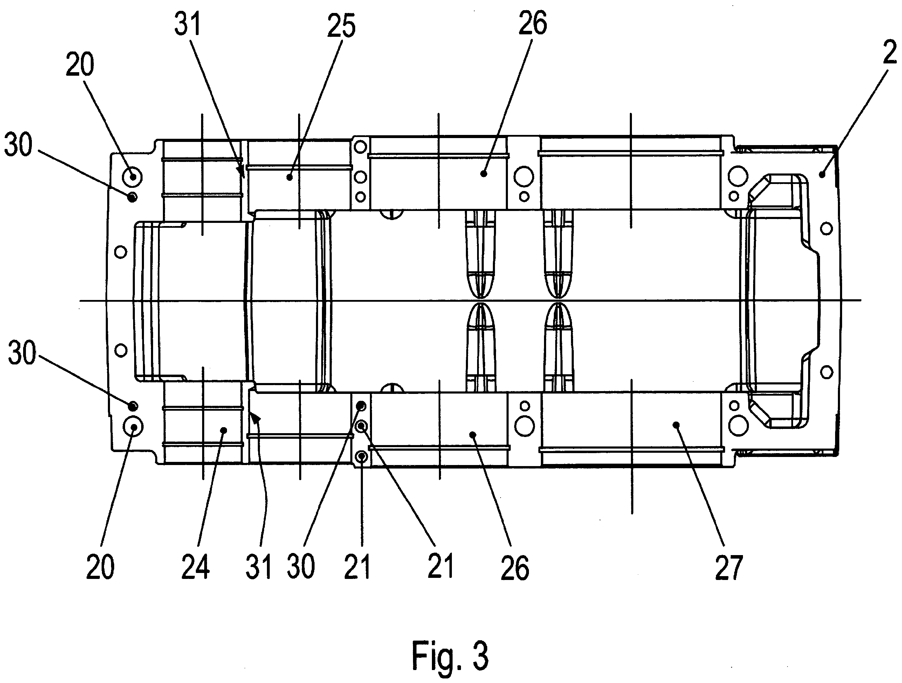

In der Figur 3 ist eine Draufsicht auf das untere Gehäuseteil 2 dargestellt

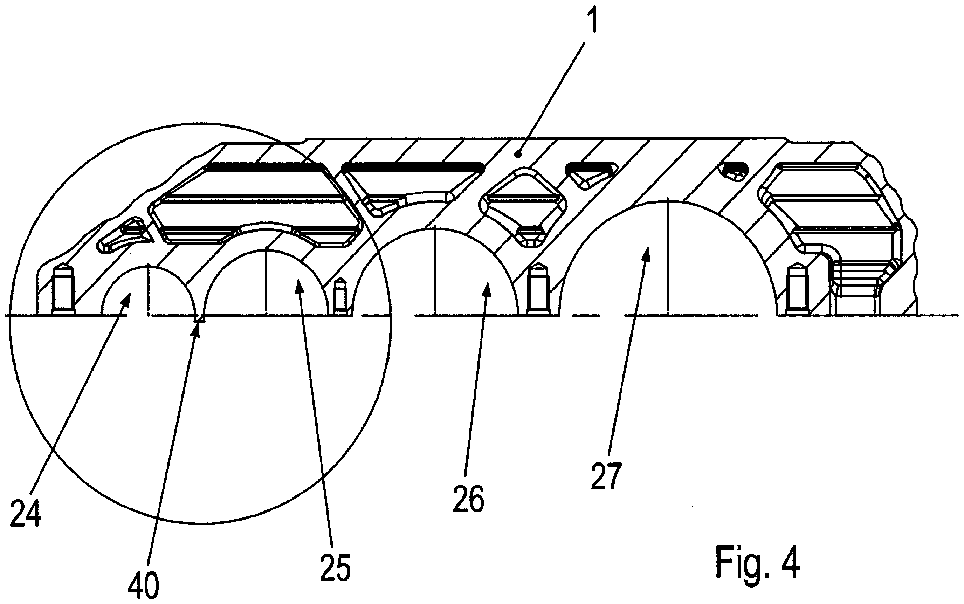

In der Figur 4 ist eine Seitenansicht auf das obere Gehäuseteil 1 dargestellt.

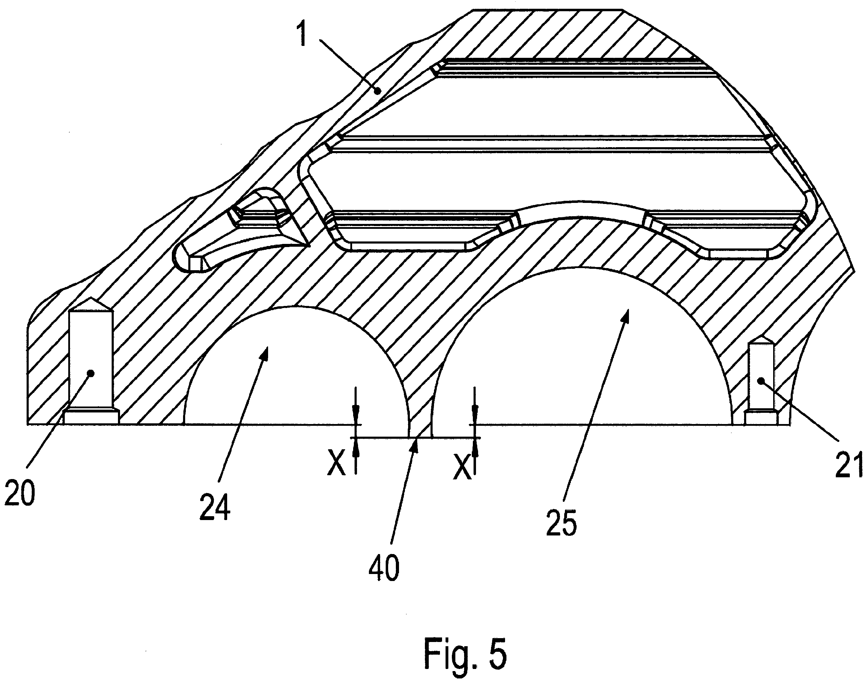

In der Figur 5 ist ein vergrößerter Ausschnitt der Figur 4 dargestellt.

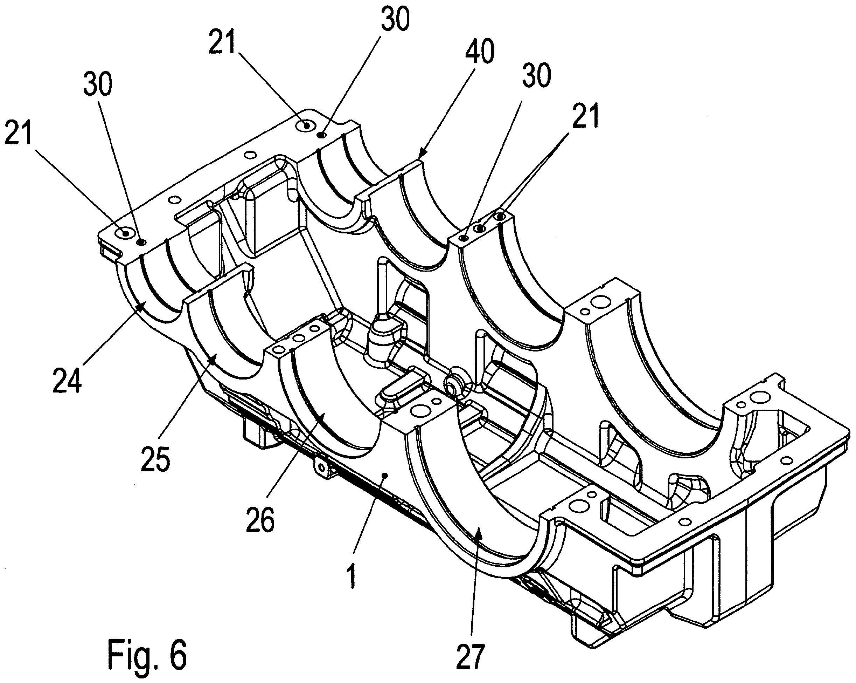

In der Figur 6 ist das obere Gehäuseteil 1 in Schrägansicht dargestellt.

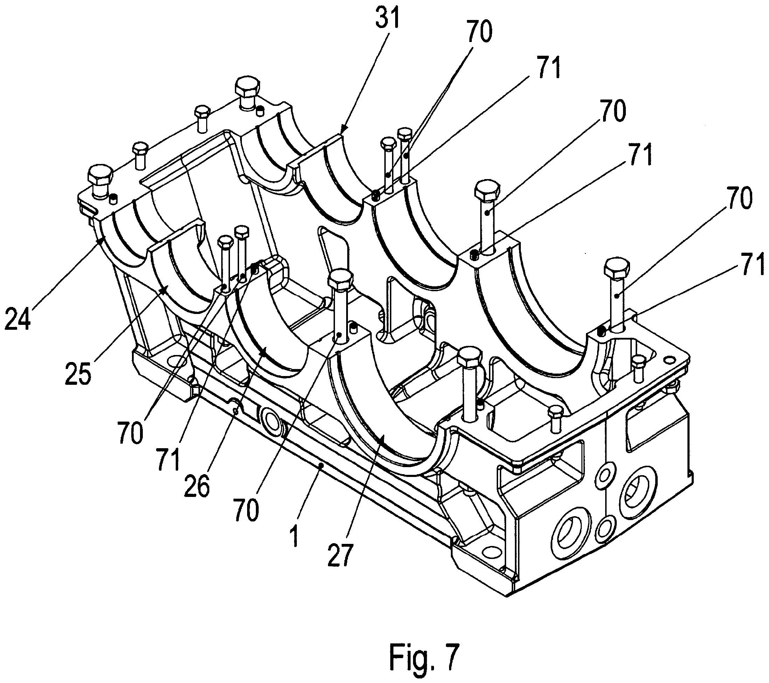

In der Figur 7 ist das untere Gehäuseteil 2 in Schrägansicht dargestellt.

Wie in den Figuren dargestellt, weist das Getriebe ein Gehäuse auf, das aus einem unteren Gehäuseteil 2 und einem auf diesem unteren Gehäuseteil 2 aufgesetzten oberen Gehäuseteil 1 zusammengesetzt ist.

Dabei ist eine ebene Trennfläche (28) zwischen den beiden Gehäuseteilen (1, 2) vorgesehen.

Hierzu sind alle Stege und Gehäusewände des unteren Gehäuseteils 2 entlang dieser Trennfläche (28) abgefräst und eben bearbeitet.

Ebenso ist zwar auch das obere Gehäuseteil 1 mit einer ebenen Trennfläche (28) bearbeitet, aber ein Steg 40 ragt über diese Trennfläche (28) hervor und weist einen Überstand X auf. Dieser Steg 40 ist zwischen zwei Lageraufnahmen (24, 25) angeordnet, wobei aber keine Schraube zwischen den beiden Lageraufnahmen (24, 25) angeordnet ist.

Als Lageraufnahmen 24, 25 und 26 zylindrische Bohrungen ins Gehäuse eingebracht, deren Bohrungsachsen in einer gemeinsamen Ebene angeordnet sind, welche die Trennfläche (28) enthält.

Innerhalb der gemeinsamen Ebene in senkrechter Richtung zu den Bohrungsachsen sind die Lageraufnahmen jeweils beabstandet voneinander. Die zugehörigen Beabstandungsbereiche weisen jeweils zur Trennfläche (28) hin sich verjüngende Stege des oberen und unteren Gehäuseteils (1, 2) auf. Mit Ausnahme eines am oberen Gehäuseteil 1 ausgebildeten, besonders schmalen Stegs 40 und eines am unteren Gehäuseteil 2 ausgebildeten, besonders schmalen Stegs 31 weisen alle anderen Stege Bohrungen auf, durch welche Schrauben zum Aneinanderpressen der beiden Gehäuseteile (1, 2) geführt sind. Somit ist jeweils ein dieser eine solche Bohrung enthaltender Steg des oberen Gehäuseteils 1 auf einen jeweiligen, ebenfalls eine Bohrung aufweisenden Steg des unteren Gehäuseteils 2 gedrückt und eine dichte Verbindung entlang der Trennfläche (28) in einfacher Weise herstellbar. Vorzugsweise ist zwischen den Stegen Klebstoff und/oder ein Dichtmittel zusätzlich eingebracht.

Der Steg 40 des oberen Gehäuseteils 1 ragt vor dem Andrücken des oberen ans untere Gehäuseteil (1, 2) hervor, insbesondere um den Überstand X näher zum unteren Gehäuseteil 1 hin. Beim Zusammenfügen wird der Steg 40 auf den Steg 31 gedrückt und somit wird zumindest das obere Gehäuseteil 1 verformt beim Anziehen der Schrauben. Auf diese Weise wird also eine Dichtigkeit gewährleistendes Andrücken der Stege (31, 40) erreicht. Vorzugsweise ist auch zwischen den Stegen (31, 40) Klebstoff und/oder ein Dichtmittel zusätzlich eingebracht.

Zur Herstellung hochgenau gearbeiteter Lagerbohrungen wird wegen der genannten Verformung zur Herstellung des Gehäuses folgendermaßen vorgegangen:
IN einem ersten Verfahrensschritt wird bei den Rohteilen des ersten und zweiten Gehäuseteils (1, 2) die Trennfläche (28) des oberen Gehäuseteils 1 und des unteren Gehäuseteils 2 bearbeitet, insbesondere gefräst. Dabei wird der Steg 40 derart bearbeitet, dass er aus der Trennfläche (28) hervorragt.

Danach werden mit Ausnahme des Steges 40 in allen zwischen Lageraufnahmen angeordneten Stegen in einer jeweiligen, in den jeweiligen Steg des unteren Gehäuseteils 2 eingebrachten Ausnehmung ein jeweiliger Stift 30 eingebracht.

Zusätzlich werden Schrauben zur Verschraubung des unteren Gehäuseteils 2 mit dem oberen Gehäuseteil 1 in den jeweiligen Steg eingebracht. Vorzugsweise nimmt somit jeder Steg mit Ausnahme des Stegs 40 jeweils einen Stift und zwei Schrauben auf. Auf diese Weise ist beim nachfolgenden Zusammenfügen des oberen Gehäuseteils 1 und des unteren Gehäuseteils 2, also beim zweiten Verfahrensschritt, eine präzise relative Positionierung mittels des Stiftes ermöglicht und mittels der Schrauben eine ausreichende Anpresskraft bewirkbar.

In einem dritten Verfahrensschritt werden nach dem Zusammenfügen des oberen Gehäuseteils 1 und des unteren Gehäuseteils 2 die Lageraufnahmen gebohrt. Dabei ist die Bohrungsachse in der ebenen Trennfläche (28) enthalten.

Die durch den Steg 40 beim Zusammenfügen erzeugten Verspannungen verzerren somit die Lageraufnahmen nicht, da diese im zusammengefügten Zustand des Gehäuseteils eingebracht werden.

Nach Einbringen der Lageraufnahmen, also Lagerbohrungen, wird die Schraubverbindung zwischen unterem Gehäuseteil 2 und oberem Gehäuseteil 1 gelöst.

Nachfolgend werden die beiden Gehäuseteile 1 und 2 gereinigt und danach werden Lager, Wellen des Getriebes und die auf den Wellen drehfest verbundenen Zahnräder in zumindest eines der Gehäuseteile 1 oder 2 eingebracht.

Als letzter Verfahrensschritt wird dann wiederum das obere Gehäuseteil 1 auf das untere Gehäuseteil 2 aufgesetzt und mittels der Stifte und Schrauben verbunden, insbesondere aneinander angedrückt. Somit ist das Getriebe dann fertiggestellt.

Zwar ist bei diesem Herstellverfahren von Nachteil, dass die Gehäuseteile 1 und 2 zuerst verbunden werden und danach wieder separiert werden, um dann letztendlich doch wieder verbunden zu werden. Vorteilig ist jedoch, dass die Verspannungen und damit einhergehenden Verformungen, welche beim Verbinden durch das Andrücken des über die ebene Trennfläche (28) hervorragenden Stegs 40 auf den Steg 31 bewirkt werden, keine Verformung der zylindrischen Lageraufnahme, also Lageraufnahmebohrung, bewirken. Denn die Lagerbohrungen werden eingebracht bei verbundenen, also verformten Gehäuseteilen 1 und 2.

Dabei ist die Teilung des Gehäuses in ein oberes Gehäuseteil 1 und ein unteres Gehäuseteil 2 vorteilhaft für die Montage der Wellen und Lager, da diese nur von in der Normalenrichtung der Trennfläche (28) eingelegt werden müssen und nicht durch enge Öffnungen eingefädelt werden müssen.

Bei dem in den Figuren gezeigten Ausführungsbeispiel ist das Lager der eintreibenden Welle in der Lageraufnahme 24 aufgenommen, die Lager der Zwischenwellen in den Lageraufnahmen 25 und 26 und das Lager der abtreibenden Welle in der Lageraufnahme 27.

Die Lagerbohrungen, also Lageraufnahmen (24, 25, 26, 27), durchdringen die Wandung der Gehäuseteile (1, 2) und sind jeweils zweiteilig ausgeführt, also an der Vorderseite und Hinterseite des jeweiligen Gehäuseteils (1, 2). Die Stege (31, 40) bilden die Endbereiche der Wandung der Gehäuseteile (1, 2) und sind jeweils zweiteilig ausgeführt, also an der Vorderseite und Hinterseite des jeweiligen Gehäuseteils (1, 2).

### Bezugszeichenliste

1 oberes Gehäuseteil
2 unteres Gehäuseteil
20 Schraube
21 Schraube
22 Schraube
23 Schraube
24 Lageraufnahme
25 Lageraufnahme
26 Lageraufnahme
27 Lageraufnahme
28 ebene Trennfläche
30 Stift
31 Steg
40 hervorragender Steg
70 Schraube
71 Stift
X Überstand

## Patentansprüche

1. Getriebe mit einem Gehäuse, das ein unteres Gehäuseteil (2) und ein oberes Gehäuseteil (1) aufweist,
wobei das Gehäuse Lageraufnahmen (24, 25, 26, 27) aufweist,
wobei am unteren Gehäuseteil (2) zwischen jeweils zwei Lageraufnahmen (24, 25, 26, 27) jeweils ein Steg (40) ausgeformt ist, welcher jeweils auf einen am oberen Gehäuseteil (1) ausgeformten, zwischen den jeweiligen Lageraufnahmen (24, 25, 26, 27) angeordneten Steg (40) angedrückt ist,
**dadurch gekennzeichnet, dass**
- die Gehäuseteile eine derartige elastische Verformung aufweisen, dass bei Trennen der beiden Gehäuseteile, also elastischem Entspannen, ein erster Steg (40) der Stege eines ersten der beiden Gehäuseteile über eine ebene Fläche, also eine Trennfläche (28), hervorragt, welche die anderen Stege des ersten Gehäuseteils begrenzt.

2. Getriebe nach Anspruch 1,
**dadurch gekennzeichnet, dass**
der erste Steg (40) zwischen der Lageraufnahme (24, 25, 26, 27) für das Lager einer eintreibenden Welle des Getriebes und der Lageraufnahme (24, 25, 26, 27) für ein Lager einer ersten Zwischenwelle des Getriebes angeordnet ist.

3. Getriebe nach einem der vorangegangenen Ansprüche,
**dadurch gekennzeichnet, dass**
mit Ausnahme des ersten Stegs (40) und des diesen ersten Steg (40) berührenden Stegs (40) des anderen Gehäuseteils alle Stege eine Ausnehmung zur Aufnahme eines Stifts (30) aufweisen.

4. Getriebe nach einem der vorangegangenen Ansprüche,
**dadurch gekennzeichnet, dass**
die Lageraufnahmen (24, 25, 26, 27) jeweils als Lagerbohrung ausgeführt sind, wobei die Bohrungen, insbesondere die Bohrungsachse, parallel zueinander ausgerichtet sind,
die Bohrungsachsen der Lagerbohrungen in einer Ebene angeordnet sind.

5. Getriebe nach einem der vorangegangenen Ansprüche,
**dadurch gekennzeichnet, dass**
in den ersten Steg (40) des ersten Gehäuseteils keine Ausnehmung zur Aufnahme eines Stiftes (30) oder einer oder mehrerer Schrauben (20, 21, 22,23) eingearbeitet ist.

6. Getriebe nach einem der vorangegangenen Ansprüche,
**dadurch gekennzeichnet, dass**
mit Ausnahme des ersten Stegs (40) und des diesen ersten Steg (40) berührenden Stegs (40) des anderen Gehäuseteils in alle Stege jeweils eine Ausnehmung zur Aufnahme eines Stifts (30) und zumindest eine Ausnehmung zur Aufnahme einer Schraube (20, 21, 22,23) eingearbeitet sind,
insbesondere wobei die Ausnehmungen als Bohrungen ausgeführt sind, deren Bohrungsachse in Normalenrichtung zur ebenen Fläche gerichtet sind.

7. Getriebe nach einem der vorangegangenen Ansprüche,
**dadurch gekennzeichnet, dass**
der erste Steg (40) schmaler als die anderen Stege des ersten Gehäuseteils ausgeführt ist.

8. Verfahren zum Herstellen eines Getriebes,
wobei im ersten Verfahrensschritt eine mit Ausnahme eines für einen ersten Steg (40) vorgesehenen Bereichs ebene Trennfläche (28) an einem ersten Rohgussteil zur Herstellung eines oberen Gehäuseteils (1) des Gehäuses des Getriebes bearbeitet wird, insbesondere ausgefräst wird,
wobei der Bereich durch die die ebene Trennfläche (28) enthaltende Trennebene hindurchragt,
wobei eine ebene Trennfläche (28) an einem zweiten Rohgussteil zur Herstellung eines unteren Gehäuseteils (2) des Gehäuses des Getriebes bearbeitet wird, insbesondere ausgefräst wird,
wobei danach in einem nachfolgenden zweiten Verfahrensschritt außerhalb des Bereichs jeweilige Ausnehmungen zur Aufnahme eines jeweiligen Stifts (30) oder einer jeweiligen Schraube (20, 21, 22,23) in das untere und/oder obere Gehäuseteil (1) eingebracht werden, insbesondere gebohrt werden,
wobei in einem nachfolgenden dritten Verfahrensschritt das untere und obere Gehäuseteil (1) verbunden werden, insbesondere mittels der Stifte oder der Schrauben (20, 21, 22,23),
in einem nachfolgenden vierten Verfahrensschritt Lagerbohrungen jeweils in das untere und obere Gehäuseteil eingebracht werden zur Herstellung des aus unterem und oberem Gehäuseteil (1) gebildeten Gehäuses, insbesondere wobei auch der erste Steg (40) gebildet wird,
in einem nachfolgenden fünften Verfahrensschritt das untere Gehäuseteil (2) vom oberen Gehäuseteil (1) getrennt wird, insbesondere durch Entfernen der Schrauben (20, 21, 22,23),
in einem nachfolgenden sechsten Verfahrensschritt Lager, Wellen und Zahnräder im unteren Gehäuseteil (2) angeordnet werden, insbesondere nach Reinigung des oberen und des unteren Gehäuseteils (2),
in einem nachfolgenden siebten Verfahrensschritt das obere Gehäuseteil (1) auf das untere Gehäuseteil (2) aufgesetzt und verbunden wird.

## Claims

1. A gear unit having a housing which includes a lower housing part (2) and an upper housing part (1),
wherein the housing has bearing receptacles (24, 25, 26, 27),
wherein on the lower housing part (2), between two bearing receptacles (24, 25, 26, 27) in each case, there is formed one land (40) in each case which is pressed in each case onto a land (40) formed on the upper housing part (1) and arranged between the respective bearing receptacles (24, 25, 26, 27),
**characterised in that**
- the housing parts exhibit such elastic deformation that upon separating, i.e. elastically releasing, the two housing parts a first land (40) of the lands of a first one of the two housing parts protrudes across a flat face, i.e. a joint face (28), which delimits the other lands of the first housing part.

2. A gear unit according to Claim 1,
**characterised in that**
the first land (40) is arranged between the bearing receptacle (24, 25, 26, 27) for the bearing of an input shaft of the gear unit and the bearing receptacle (24, 25, 26, 27) for a bearing of a first intermediate shaft of the gear unit.

3. A gear unit according to one of the preceding claims,
**characterised in that**
with the exception of the first land (40) and the land (40) of the other housing part which contacts this first land (40), all the lands have a recess for receiving a pin (30).

4. A gear unit according to one of the preceding claims,
**characterised in that**
the bearing receptacles (24, 25, 26, 27) are embodied in each case as bearing bores, wherein the bores, in particular the bore axes, are oriented parallel to each other,
the bore axes of the bearing bores being arranged in one plane.

5. A gear unit according to one of the preceding claims,
**characterised in that**
no recess for receiving a pin (30) or one or more screws (20, 21, 22, 23) is incorporated in the first land (40) of the first housing part.

6. A gear unit according to one of the preceding claims,
**characterised in that**
with the exception of the first land (40) and the land (40) of the other housing part which contacts this first land (40), in each case one recess for receiving a pin (30) and at least one recess for receiving a screw (20, 21, 22, 23) are incorporated in all the lands,
in particular wherein the recesses are embodied as bores, the bore axes of which are directed in the normal direction to the flat face.

7. A gear unit according to one of the preceding claims,
**characterised in that**
the first land (40) is made narrower than the other lands of the first housing part.

8. A method for producing a gear unit,
wherein in the first method step a joint face (28) which, with the exception of a region provided for a first land (40), is flat is machined, in particular milled out, on a first raw casting to produce an upper housing part (1) of the housing of the gear unit,
wherein the region protrudes through the parting plane containing the flat joint face (28),
wherein a flat joint face (28) is machined, in particular milled out, on a second raw casting to produce a lower housing part (2) of the housing of the gear unit,
wherein thereafter in a subsequent second method step outside the region respective recesses for receiving a respective pin (30) or a respective screw (20, 21, 22, 23) are formed, in particular drilled, in the lower and/or upper housing part (1),
wherein
in a subsequent third method step the lower and upper housing parts (1) are connected, in particular by means of the pins or the screws (20, 21, 22, 23),
in a subsequent fourth method step bearing bores are formed in each case in the lower and the upper housing parts
to produce the housing formed of the lower and upper housing parts (1), in particular with the first land (40) also being formed,
in a subsequent fifth method step the lower housing part (2) is separated from the upper housing part (1), in particular by removing the screws (20, 21, 22, 23),
in a subsequent sixth method step bearings, shafts and gear wheels are arranged in the lower housing part (2), in particular once the upper and the lower housing part (2) have been cleaned,
in a subsequent seventh method step the upper housing part (1) is placed on the lower housing part (2) and connected.

## Revendications

1. Transmission munie d'un carter comprenant une partie inférieure (2) et une partie supérieure (1),
ledit carter comportant des logements (24, 25, 26 , 27) de paliers,
sachant qu'une membrure (40) ménagée, à chaque fois, sur la partie inférieure (2) du carter entre deux logements respectifs (24, 25, 26, 27) de paliers, est pressée à chaque fois sur une membrure (40) ménagée sur la partie supérieure (1) dudit carter, entre les logements (24, 25, 26 , 27) de paliers considérés,
**caractérisée par le fait que**
- les parties du carter présentent une déformation élastique telle que lors d'une séparation des deux parties du carter, à savoir lors d'une détente élastique, une première membrure (40), parmi les membrures d'une première partie, au sein desdites deux parties du carter, dépasse au-delà d'une surface plane, c'est-à-dire d'une surface de séparation (28) qui délimite les autres membrures de ladite première partie du carter.

2. Transmission selon la revendication 1,
**caractérisée par le fait que**
la première membrure (40) est interposée entre le logement (24, 25, 26, 27) affecté au palier d'un arbre d'entrée de la transmission
et le logement (24, 25, 26, 27) dévolu à un palier d'un premier arbre intermédiaire de ladite transmission.

3. Transmission selon l'une des revendications précédentes,
**caractérisée par le fait que**,
à l'exception de la première membrure (40) et de la membrure (40) de l'autre partie du carter qui est en contact avec cette première membrure (40), toutes les membrures sont pourvues d'un évidement conçu pour recevoir un téton (30).

4. Transmission selon l'une des revendications précédentes,
**caractérisée par le fait que**
les logements (24, 25, 26, 27) des paliers sont réalisés, à chaque fois, sous la forme d'un alésage de montage, sachant que les alésages, en particulier les axes desdits alésages, sont orientés parallèlement les uns aux autres,
les axes des alésages de montage étant disposés dans un plan.

5. Transmission selon l'une des revendications précédentes,
**caractérisée par le fait**
**qu'**aucun évidement, dévolu à la réception d'un téton (30), ou d'une ou plusieurs vis (20, 21, 22, 23), n'est pratiqué dans la première membrure (40) de la première partie du carter.

6. Transmission selon l'une des revendications précédentes,
**caractérisée par le fait que**,
à l'exception de la première membrure (40) et de la membrure (40) de l'autre partie du carter qui est en contact avec cette première membrure (40), un évidement conçu pour recevoir un téton (30), et au moins un évidement conçu pour recevoir une vis (20, 21, 22, 23), sont pratiqués à chaque fois dans toutes les membrures,
lesdits évidements étant notamment réalisés en tant qu'alésages dont les axes sont orientés dans une direction perpendiculaire à la surface plane.

7. Transmission selon l'une des revendications précédentes,
**caractérisée par le fait que**
la première membrure (40) est réalisée plus étroite que les autres membrures de la première partie du carter.

8. Procédé de fabrication d'une transmission,
sachant que, lors de la première étape opératoire, une surface de séparation (28), plane à l'exception d'une région prévue pour une première membrure (40), est usinée et notamment fraisée sur une première pièce en fonte brute, en vue de produire une partie supérieure (1) du carter de ladite transmission,
ladite région parcourant l'intégralité du plan de séparation qui inclut ladite surface plane de séparation (28),
une surface plane de séparation (28) étant usinée et notamment fraisée sur une seconde pièce en fonte brute, en vue de produire une partie inférieure (2) dudit carter de la transmission,
sachant qu'ensuite, lors d'une deuxième étape opératoire successive, des évidements considérés, conçus pour recevoir un téton (30) respectif ou une vis (20, 21, 22, 23) respective, sont pratiqués et notamment forés dans la (les) partie(s) inférieure et/ou supérieure (1) du carter, à l'extérieur de ladite région,
sachant que,
lors d'une troisième étape opératoire successive, les parties inférieure et supérieure (1) dudit carter sont reliées, notamment au moyen des tétons ou des vis (20, 21, 22, 23),
lors d'une quatrième étape opératoire successive, des alésages de montage sont respectivement pratiqués dans lesdites parties inférieure et supérieure du carter,
en vue de produire le carter constitué desdites parties inférieure et supérieure (1),
la première membrure (40) étant également formée, en particulier,
lors d'une cinquième étape opératoire successive, la partie inférieure (2) du carter est séparée d'avec la partie supérieure (1) dudit carter, notamment par enlèvement desdites vis (20, 21, 22, 23),
lors d'une sixième étape opératoire successive, des paliers, des arbres et des roues dentées sont disposés dans ladite partie inférieure (2) du carter, notamment après nettoyage des parties supérieure et inférieure (2) dudit carter,
lors d'une septième étape opératoire successive, ladite partie supérieure (1) du carter est mise en place sur ladite partie inférieure (2) dudit carter, puis reliée.
